# EUROPEAN PATENT SPECIFICATION

(11) **EP 0 973 831 B1**
(45) Date of publication and mention of the grant of the patent: **02.01.2004**
(21) Application number: 98912096.9
(22) Date of filing: 27.03.1998
(51) Int. Cl.: C08K 5/17, C08J 3/02, C08L 75/04, C08L 61/32, C09J 5/06, C09J 4/06, C09J 201/08

(54) **THERMOSET CROSS-LINKABLE PRE-APPLIED ADHESIVE**
WÄRMEVERNETZENDES PREAPPLIZIERTES KLEBEMITTEL
ADHESIF RETICULABLE THERMODURCI PRE-APPLIQUE

(30) Priority: 09.04.1997 US 835629; 09.04.1997 US 835631
(43) Date of publication of application: 26.01.2000
(73) Proprietor: ASHLAND INC., Columbus, OH 43216 (US)
(72) Inventor: NORBY, David, Bartlett, Columbus, OH 43220 (US)
(74) Representative: VOSSIUS & PARTNER
(86) International application number: PCT/US1998/006088
(87) International publication number: WO 1998/045366

(56) References cited:
- JP-A- 58 147 315
- US-A- 2 586 587
- US-A- 4 851 460
- US-A- 4 948 829
- US-A- 5 015 688
- US-A- 5 631 341

## Description

This invention relates to a method of preparing a laminate using a waterborne heat curable adhesive. The thermoset adhesives are preapplied to vinyl substrates or release films and supplied as free films for subsequent heat reactivating application and bonding to another substrate.

### BACKGROUND OF THIS INVENTION

Most pre-applied adhesives are pressure-sensitive adhesives and are not heated after application by the consumer. A recent development with pre-applied adhesives is a heat activated adhesive. Pre-applied adhesives may be prepared from hot melt adhesives; either non-reactive thermoplastic adhesive or reactive thermoset adhesive. They may also be prepared from water borne emulsions or dispersions, which are currently available only as the non-reactive thermoplastic systems. No reactive thermoset water borne pre-applied adhesives are currently available. Reactive hot melt adhesives are on the market although not in the form of a pre-applied storage stable adhesive. There is a need to fill this void for a reactive thermoset water borne pre-applied system.

In this invention, water borne adhesive systems are applied to the surface of a metal, vinyl, wood or plastic substrate. For example, a thin film of liquid adhesive is applied to and dried on a roll of vinyl. This roll which now has the pre-applied adhesive on the back of the vinyl is shipped to a manufacturer who heat laminates the vinyl usually to a rigid substrate, such as, a wood door or sheets of cold rolled steel or plastic. The advantage of the pre-applied method is elimination of all liquid chemicals from the final manufacturer's laminating facility. The pre-applied method also provides uniformity in application which results in improved quality of the final product. This invention is a water borne pre-applied system that when heat activated (at the final manufacturers facility) forms a thermoset adhesive bond. This thermoset bond, in contrast to commercially available thermoplastic bond coats, adds additional performance properties that are needed in the market place. The most critical performance need for pre-applied adhesives, second only to the adhesive bond strength, is heat resistance of the final product. The pre-applied adhesive is applied and dried on a roll of vinyl, foam or cloth. The end user of this roll of goods would like to have a processing procedure to heat activate and bond the unrolled goods to a surface at some minimum activation temperature. The lower the heat activation temperature the less the distortion of the final product. The service conditions of the final product often encounter elevated temperatures. In automotive applications for example, it is not uncommon to need performance properties for heat resistance for interior parts of 200°F because car interiors can reach such a temperature in the summer.

This invention is a waterborne thermoset system that can be dried on rolled goods, stored, and then heat activated at a later date at a relatively low activation temperature. The laminate exhibits unique elevated temperature heat resistant properties superior to the heat resistance of conventional thermoplastic adhesives. Longer press times permit lower activation temperatures and shorter press times require higher activation temperatures.

Preferred embodiments of the invention are listed in the following :
1. A method of preparing laminated substrates of substrate-thermoset adhesive-substrate comprising
   combining an acrylic latex having reactive functional groups and a polyurethane dispersion with a tertiary amine blocking agent so that the pH is greater than 7,
   adding said combination to a melamine formaldehyde resin having reactive imino functionality,
   forming a waterborne liquid adhesive having shelf stability of 4 months at ambient temperature and 2 months at elevated temperature, dispensing said adhesive on to a release liner forming an adhesive film,
   drying said film,
   removing said release liner,
   inserting said film between two substrates
   heating said substrates and film,
   volatilizing said amine,
   forming crosslinked thermoset polymer, and
   adhering both substrates together.
2. The method of embodiment 1 wherein said acrylic latex is a carboxyl functional latex.
3. The method of embodiment 1 wherein said adhered laminated substrates are resistant to delamination at 240°F (116°C) with a 250 gram weight load.
4. The method of embodiment 1 wherein said resin comprises more than 1.0 parts by weight methoxy methyl imino melamine formaldehyde resin.
5. The method of embodiment 1 wherein said substrates comprise a porous substrate and a non-porous substrate.
6. The method of embodiment 1 wherein during said heating step said amine volatilizes and said pH drops below 16 forming acid groups capable of catalyzing the reaction between carboxyl groups and imino groups.
7. The laminate made by the method of embodiment 1.
8. The method of embodiment 1 wherein said elevated temperature is greater than 210°F (99°C).
9. A method of laminating two substrates comprising combining a functional acrylic latex and a polyurethane dispersion with a tertiary amine, reaching pH greater than 8, adding said combination to melamine formaldehyde resin, forming a water borne liquid adhesive, dispensing said adhesive onto a first substrate, drying said coated substrate, rolling said coated substrate, transporting said roll to a place of manufacture, unrolling said substrate, applying said substrate to a second substrate so that the coated surface of said first substrate is adjacent to said second substrate, heating said substrates under pressure, curing said adhesive, removing said substrates having cured thermoset adhesive there between and said laminate being resistant to delamination at 240°F (116°C).
10. The method of embodiment 9 wherein said acrylic latex functionaltiy is solely carboxyl and hydroxyl functionality.
11. The method of embodiment 9 comprisng a porous substrate and a non-porous substrate.
12. The method of embodiment 9 wherein during said heating step said amine volatilizes, said pH drops below 7 forming acid groups capable of catalyzing the reaction between carboxyl groups and iminö groups on said melamine resin.
13. The method of embodiment 9 wherein said tertiary amine comprises alkanolamine.
14. The method of embodiment 9 wherein said alkanolamine comprises dimethylethanolamine or diethylethanolamine.
15. The method of embodiment 9 wherein said amine vapor pressure at 20°C is 1 mm to 4 mm.
16. The method of embodiment 9 wherein said mixture comprises
   10 to 30 parts acrylic latex,
   70 to 85 parts polyurethane dispersion,
   0.2 to1.0 parts tertiary amine, and
   1 to 3 parts melamine formaldehyde resin.
17. The method of embodiment 16 wherein said mixture comprises:
   20 parts acrylic latex,
   77 parts polyurethane dispersion,
   1.5 parts melamine formaldehyde resin,
   and 0.6 parts tertiary amine.

### Detailed Description of the Invention

The first ingredient of the adhesive of the invention is a urethane dispersion such as the aliphatic polyester waterborne urethane dispersions available from Zeneca Resins as NEOREZ R-9617 and R9621 dispersions.

The second ingredient of the adhesive of this invention is a carboxy-modified reactive acrylic latex such as that available as Hycar 26084 carboxy-modified acrylic latex from BF Goodrich, Cleveland, Ohio. The preferred latex lacks any other functionality than carboxyl functionality at 6.3 acid value, and hydroxyl functionality at hydroxyl value 5.

The third ingredient of the adhesive of this invention is a tertiary amine such as N,N-Diethylethanolamine or N-N-Dimethylethanolamine. The preferred amines have vapor pressures from 1 to 4 mm mercury at 20°C. The most preferred amine is diethyl ethanolamine.

The fourth ingredient is a melamine-formaldehyde resin having imino (-NH) functionality such as Cymel 327 resin or Cymel 323 resin from Cytec, West Paterson, NJ. The preferred resin has 1 to 2.5 triazine units per molecule. The most preferred resin has methoxy methyl-imino functionality and 1.75 triazine groups per molecule.

Laminates using the adhesive of the invention can be made with vinyl and metal or wood. Useful vinyl substrates are available from Uniroyal Engineered Products, Port Clinton, Ohio. Useful foam backed vinyl substrates include those from Foamex International, Auburn, Indiana. Among the useful wood substrates are those from Mills Pride, Waverly, Ohio. Useful metal substrates are available from ACT Laboratories, Hillsdale, Michigan.

In the following Examples all measurements are in the metric system and all parts are by weight unless otherwise noted. All references mentioned herein are specifically incorporated by reference.

### EXAMPLE 1

The control water-borne thermoplastic preapplied adhesive was a mixture of:

| | |
|---|---|
| 60g | Zeneca R9621 urethane dispersion¹ |
| 20g | Zeneca R9617 urethane dispersion¹ |
| 0.02g | Proxel 6XL 1,2 benzisothiazolin-3-one preservative² |
| 0.02g | Drewplus L-407 foam control agent³ |
| 0.06g | Aquasperse 11877-7226 phthaloblue color⁴ |
| 0.25g | Nopco DSX-1550 rheology modifier⁵ |
| 20.0g | Hycar 26084 carboxy-modified reactive acrylic latex⁶ |

The adhesive was prepared by blending the ingredients in the order listed.

### EXAMPLE 2

The thermoset adhesive of this invention was prepared by combining

| | |
|---|---|
| 44g | Zeneca R-9621 urethane dispersion |
| 33g | Zeneca R9617 urethane dispersion |
| 0.01 | Proxel6XL 1,2 benzisothiazolin-3-one preservative |
| 0.01 | Drewplus L-407 foam control agent |
| 0.11g | Aquasperse 11877-7226 phthaloblue color |
| 0.33g | Nopco DSX-1550 rheology modifier |
| 20.4g | Hycar 26084 carboxy-modified reactive acrylic latex |
| 0.55g | Diethylethanolamine |
| 1.54g | Cymel 327 melamine resin crosslinker |
| 0.20g | Surfynol 440 wetting agent |
| 1 Zeneca, Wilmington, MA | |
| 2 ICI, Wilminton, DE | |
| 3 Ashland Inc., Boonton, NJ | |
| 4 HÜLS America, Piscataway, NJ | |
| 5 Henkel, Ambler, PA | |
| 6 BF Goodrich, Cleveland, OH | |
| 7 Union Carbide, Danbury, CT | |
| 8 Cytec, West Paterson, NJ | |
| 9 Air Products & Chemicals, Allentown, PA | |

These formulations were applied to the foam side of foam backed vinyl from Foamex International, Auburn, Indiana and then to vinyl from Uniroyal Engineered Products, Port Clinton, Ohio, then dried, and were then heat activated. Both adhesives showed the same adhesive bond at room temperature, but only the Example 2 crosslinked thermoset adhesive formulation passed the following heat resistance tests:

**TABLE 1 -**

| HEAT RESISTANCE TEST | | | | |
|---|---|---|---|---|
| | **OVEN TEMP** | **TIME IN OVEN** | **HANGING WEIGHT** | **RESULT** |
| Example 2 Thermoset Adhesive | 225°F | 24 Hours | 30 Grams | PASS |
| | 101°C | 24 Hours | 30 Grams | PASS |
| | 225°F | 24 Hours | 30 Grams | PASS |
| | 101°C | 24 Hours | 30 Grams | PASS |
| | 185°F 85°C | | | |
| | 185°F 85°C | | | |
| Example 1 Control Thermoplastic Adhesive | 185°F 85°C | 4 Hours | 30 Grams | FAIL |
| | 185°F 85°C | 3 Hours | 30 Grams | FAIL |
| | 185°F 85°C | 6 Hours | 10 Grams | FAIL |

The heat resistance is believed to derive from some crosslinking of the amino resin. The choice of amino resin and its stabilization in the formula are unique aspects of the system. Most amino resins will react under acidic conditions. Even a weak acid such as a carboxyl group can catalyze the reaction. To maximize stability of the formulation an amine such as diethylethanol amine with the proper vapor pressure of from 1 to 4mm Hg at 20°C serves to block or neutralize any acidic groups. The amine blocking agent being fugitive can be driven off at certain higher temperatures, but remains in the adhesive film at ambient temperatures. The choice of amino resin is also important. The partially methylated melamine-formaldehyde resins require very strong acid catalysis, heat and dwell time and although are quite stable, they are difficult to react. High imino melamine-formaldehyde resins are best. The best of both worlds can be achieved, i.e. the balance of shelf stability vs. cure response.
The following Table 2 shows shelf stability of the dried film at elevated temperatures.

**TABLE 2**

| | STORAGE STABILITY TIME | SUBSEQUENT ABILITY TO CROSS LINK |
|---|---|---|
| | | |
| Example 1 (Thermoplastic) | 13 Days/120°F | PASS |
| Example 2 (Thermoset) | 12 Days/120°F | FAIL |
| | | |
| | a) 30 Days/95°F | PASS |
| | at 30 Days R.T. and then | |
| | b) 10 Days/95°F | PASS |

Table 2 shows that the dried film adhesive of this invention is stable at 120°F for 12 days. It passed 40 days of shelf stability testing at 95°F. The preferred formulation according to Table 3 below had heat resistance up to 240°F at 60 seconds.

**TABLE 3**

| TIME & TEMPERATURE FOR CROSSLINK OF FILM FROM PREAPPLIED THERMOSET ADHESIVE OF EXAMPLE 2 | | | |
|---|---|---|---|
| **CURE CONDITIONS OF DRIED FILM** | | | **HEAT RESISTANCE 240°F/250 gr LOAD** |
| **PLATEN (°F)** | **DWELL (SEC.)** | **PSI** | |
| 280 | 20 | 4 | PASS |
| 270 | 20 | 4 | PASS |
| 260 | 20 | 4 | FAIL |
| | | | |
| 260 | 30 | 4 | PASS |
| 240 | 30 | 4 | FAIL |
| | | | |
| 240 | 60 | 4 | PASS |
| 230 | 60 | 4 | PASS |
| 220 | 60 | 4 | FAIL |

The dried adhesive film was placed between a Bondrite-1000 iron phosphated steel panel and vinyl, then placed on the platen for 10 seconds to bring it up to temperature. It was then pressed, the adhesive bond line temperature was very close to the platen temperature. The test was run at room temperature. The film was 7 days old.

Review of Table 3 reveals that a certain temperature and certain time are required to crosslink the adhesive film of the invention.

**TABLE 4**

| **THERMOSET vs THERMOPLASTIC HEAT RESISTANCE** | | | | |
|---|---|---|---|---|
| | ***CURE CONDITIONS OF DRIED FILM*** | | | ***HEAT RESISTANCE 240°F*/*250GR LOAD*** |
| | **PLATEN (°F)** | **DWELL (SEC)** | ***PSI*** | |
| Example 2 thermoset adhesive | 230 | 60 | 4 | PASS |
| Example 1 thermoplastic adhesive | 230 | 60 | 4 | 30 min. - fail (no crosslinker) |

Review of Table 4 reveals that the melamine formaldehyde resin crosslinker and amine are essential in the adhesive of this invention.

The dried adhesive film of this invention has been shown to be shelf stable on rolled vinyl goods for as long as 120 days at 70°F. The stored vinyl film rolls, after application to a solid substrate and heat activation at 230°F, passes the overnight heat resistance test at 240°F with a 250 gm load.

## Claims

1. A method of preparing laminated substrates of substrate-thermoset adhesive-substrate comprising
combining an acrylic latex having reactive functional groups and a polyurethane dispersion with a tertiary amine blocking agent so that the pH is greater than 7,
adding said combination to a melamine formaldehyde resin having reactive imino functionality,
forming a waterbome liquid adhesive having shelf stability of 4 months at ambient temperature and 2 months at elevated temperature,
dispensing said adhesive on to a release liner forming an adhesive film,
drying said film,
removing said release liner,
inserting said film between two substrates
heating said substrates and film,
volatilizing said amine,
forming crosslinked thermoset polymer, and
adhering both substrates together.

2. The method of Claim 1 wherein said acrylic latex is a carboxyl functional latex.

3. The method of Claim 1 or 2 wherein said adhered laminated substrates are resistant to delamination at 240°F (116°C) with a 250 gram weight load.

4. The method of any one of claims 1 to 3 wherein said resin comprises more than 1.0 parts by weight methoxy methyl imino melamine formaldehyde resin.

5. The method of any one of claims 1 to 4 wherein said substrates comprise a porous substrate and a non-porous substrate.

6. The method of any one of claims 1 to 5 wherein during said heating step said amine volatilizes and said pH drops below 16 forming acid groups capable of catalyzing the reaction between carboxyl groups and imino groups.

7. The laminate made by the method of any one of claims 1 to 6.

8. The method of any one of claims 1 to 7 wherein said elevated temperature is greater than 210°F (99°C).

9. A method of laminating two substrates comprising combining a functional acrylic latex and a polyurethane dispersion with a tertiary amine, reaching pH greater than 8, adding said combination to melamine formaldehyde resin, forming a water borne liquid adhesive, dispensing said adhesive onto a first substrate, drying said coated substrate, rolling said coated substrate, transporting said roll to a place of manufacture, unrolling said substrate, applying said substrate to a second substrate so that the coated surface of said first substrate is adjacent to said second substrate, heating said substrates under pressure, curing said adhesive, removing said substrates having cured thermoset adhesive there between and said laminate being resistant to delamination at 240°F (116°C).

10. The method of any one of the preceding claims wherein said acrylic latex functionaltiy is carboxyl and hydroxyl functionality.

11. The method of claim 9 or 10 comprising a porous substrate and a non-porous substrate.

12. The method of any one of claims 1 to 11 wherein during said heating step said amine volatilizes, said pH drops below 7 forming acid groups capable of catalyzing the reaction between carboxyl groups and imino groups on said melamine resin.

13. The method of any one of the preceding claims wherein said tertiary amine comprises alkanolamine.

14. The method of any one of the preceding claims wherein said alkanolamine comprises dimethylethanolamine or diethylethanolamine.

15. The method of any one of the preceding claims wherein said amine vapor pressure at 20°C is 1 mm to 4 mm of mercury at 20°C.

16. The method of any one of the preceding claims wherein said mixture comprises
10 to 30 parts acrylic latex,
70 to 85 parts polyurethane dispersion,
0.2 to 1.0 parts tertiary amine, and
1 to 3 parts melamine formaldehyde resin.

17. The method of any one of the preceding claims wherein said mixture comprises:
20 parts acrylic latex,
77 parts polyurethane dispersion,
1.5 parts melamine formaldehyde resin,
and 0.6 parts tertiary amine.

## Patentansprüche

1. Verfahren zur Herstellung laminierter Substrate aus Substrat-wärmehärtendem Klebemittel-Substrat, mit den Schritten:
Kombinieren eines Acryllatex mit reaktionsfähigen funktionellen Gruppen und einer Polyurethandispersion mit einem tertiären Aminblockierungsmittel, so daß der pH-Wert größer ist als 7,
Hinzusetzen der Kombination zu einem Melaminformaldehydharz mit einer reaktionsfähigen Iminofunktionalität,
Ausbilden eines wasserlöslichen, flüssigen Klebemittels mit einer Lagerungsstabilität von vier Monaten bei Umgebungstemperatur und von zwei Monaten bei erhöhter Temperatur,
Verteilen des Klebemittels auf einer Trennmittelfolie, die einen Klebfilm bildet,
Trocknen des Films,
Entfernen der Trennmittelfolie,
Einfügen des Films zwischen zwei Substrate,
Erwärmen der Substrate und des Films,
Verflüchtigen des Amins,
Ausbilden eines vernetzten, wärmehärtenden Polymers und
Verkleben beider Substrate miteinander.

2. Verfahren nach Anspruch 1, wobei der Acryllatex ein funktioneller Carboxyllatex ist.

3. Verfahren nach Anspruch 1 oder 2, wobei die haftenden laminierten Substrate gegen eine Delaminierung bei 240°F (116°C) bei einer Gewichtslast von 250 g beständig sind.

4. Verfahren nach einem der Ansprüche 1 bis 3, wobei das Harz mehr als 1,0 Gewichtsteile Methoxymethyliminomelaminformaldehydharz aufweist.

5. Verfahren nach einem der Ansprüche 1 bis 4, wobei die Substrate ein poröses Substrat und ein nichtporöses Substrat aufweisen.

6. Verfahren nach einem der Ansprüche 1 bis 5, wobei sich während des Erwärmungsschritts das Amin verflüchtigt und der pH-Wert unter 16 fällt, wobei Säuregruppen entstehen, die die Reaktion zwischen Carboxylgruppen und Iminogruppen katalysieren können.

7. Laminat, das nach dem Verfahren nach einem der Ansprüche 1 bis 6 hergestellt ist.

8. Verfahren nach einem der Ansprüche 1 bis 7, wobei die erhöhte Temperatur höher ist als 210°F (99°C).

9. Verfahren zum Laminieren von zwei Substraten mit den Schritten: Kombinieren eines funktionellen Acryllatex und einer Polyurethandispersion mit einem tertiären Amin, Erreichen eines pH-Werts, der größer ist als 8, Hinzusetzen der Kombination zu Melaminformaldehydharz, Ausbilden eines wäßrigen, flüssigen Klebemittels, Verteilen des Klebemittels auf einem ersten Substrat, Trocknen des beschichteten Substrats, Aufrollen des beschichteten Substrats, Transportieren der Rolle zu einem Herstellungsort, Abrollen des Substrats, Aufbringen des Substrats auf ein zweites Substrat, so daß die beschichtete Oberfläche des ersten Substrats an dem zweiten Substrat anliegt, Erwärmen des Substrats unter Druck, Härten des Klebemittels, Entfernen der Substrate, zwischen denen sich wärmeausgehärtetes Klebemittel befindet, wobei das Laminat gegen eine Delaminierung bei 240°F (116°C) beständig ist.

10. Verfahren nach einem der vorhergehenden Ansprüche, wobei die Acryllatexfunktionalität Carboxyl- und Hydroxylfunktionalität ist.

11. Verfahren nach Anspruch 9 oder 10 mit einem porösen Substrat und einem nichtporösen Substrat.

12. Verfahren nach einem der Ansprüche 1 bis 11, wobei sich während des Erwärmungsschritts das Amin verflüchtigt, der pH-Wert auf unter 7 fällt, wobei Säuregruppen entstehen, die die Reaktion zwischen Carboxylgruppen und Iminogruppen an dem Melaminharz katalysieren können.

13. Verfahren nach einem der vorhergehenden Ansprüche, wobei das tertiäre Amin Alkanolamin umfaßt.

14. Verfahren nach einem der vorhergehenden Ansprüche, wobei das Alkanolamin Dimethylethanolamin oder Diethylethanolamin umfaßt.

15. Verfahren nach einem der vorhergehenden Ansprüche, wobei der Amindampfdruck bei 20°C 1 bis 4 mm Quecksilbersäule bei 20°C ist.

16. Verfahren nach einem der vorhergehenden Ansprüche, wobei das Gemisch aufweist:
10 bis 30 Teile Acryllatex,
70 bis 85 Teile Polyurethandispersion,
0,2 bis 1,0 Teile tertiäres Amin und
1 bis 3 Teile Melaminformaldehydharz.

17. Verfahren nach einem der vorhergehenden Ansprüche, wobei das Gemisch aufweist:
20 Teile Acryllatex,
77 Teile Polyurethandispersion,
1,5 Teile Melaminformaldehydharz und
0,6 Teile tertiäres Amin.

## Revendications

1. Procédé de préparation de substrats stratifiés d'un substrat-adhésif thermodurci-substrat comprenant :
la combinaison d'un latex acrylique ayant des groupes fonctionnels réactifs et d'une dispersion de polyuréthane avec un agent de blocage d'amine tertiaire de telle sorte que le pH est supérieur à 7,
l'addition de ladite combinaison à une résine de mélamine-formaldéhyde ayant une fonctionnalité imino réactive,
la formation d'un adhésif liquide à base d'eau ayant une stabilité au stockage de 4 mois à température ambiante et de 2 mois à température élevée,
la distribution dudit adhésif sur un liner de séparation formant un film adhésif,
le séchage dudit film,
l'élimination dudit liner de séparation,
l'insertion dudit film entre deux substrats,
le chauffage desdits substrat et film,
l'évaporation de ladite amine,
la formation d'un polymère thermodurci réticulé, et
le collage des deux substrats ensemble.

2. Procédé selon la revendication 1, dans lequel ledit latex acrylique est un latex carboxyle-fonctionnel.

3. Procédé selon la revendication 1 ou 2, dans lequel lesdits substrats stratifiés collés sont résistants à la déstratification à 240°F (116°C) avec une charge d'un poids de 250 g.

4. Procédé selon l'une quelconque des revendications 1 à 3, dans lequel ladite résine comprend plus de 1,0 partie en poids de résine de méthoxy méthyl imino mélamine-formaldéhyde.

5. Procédé selon l'une quelconque des revendications 1 à 4, dans lequel lesdits substrats comprennent un substrat poreux et un substrat non poreux.

6. Procédé selon l'une quelconque des revendications 1 à 5, dans lequel pendant ladite étape de chauffage ladite amine s'évapore et ledit pH chute en dessous de 16 formant des groupes acides capables de catalyser la réaction entre des groupes carboxyle et des groupes imino.

7. Stratifié fabriqué par le procédé selon l'une quelconque des revendications 1 à 6.

8. Procédé selon l'une quelconque des revendications 1 à 7, dans lequel ladite température élevée est supérieure à 210°F (99°C).

9. Procédé de stratification de deux substrats comprenant la combinaison d'un latex acrylique fonctionnel et d'une dispersion de polyuréthane avec une amine tertiaire, l'atteinte d'un pH supérieur à 8, l'addition de ladite combinaison à une résiné de mélamine-formaldéhyde, la formation d'un adhésif liquide à base d'eau, la distribution dudit adhésif sur un premier substrat, le séchage dudit substrat revêtu, l'enroulement dudit substrat revêtu, le transport dudit rouleau vers un endroit de fabrication, le déroulage dudit substrat, l'application dudit substrat sur un second substrat de telle sorte que la surface revêtue dudit premier substrat est adjacente audit second substrat, le chauffage desdits substrats sous pression, le durcissement dudit adhésif, l'élimination desdits substrats présentant un adhésif thermodurcissable ayant durci entre ceux-ci et ledit stratifié étant résistant à la déstratification à 240°F (116°C).

10. Procédé selon l'une quelconque des revendications précédentes, dans lequel ladite fonctionnalité du latex acrylique est une fonctionnalité carboxyle et hydroxyle.

11. Procédé selon la revendication 9 ou 10 comprenant un substrat poreux et un substrat non poreux.

12. Procédé selon l'une quelconque des revendications 1 à 11, dans lequel pendant ladite étape de chauffage ladite amine s'évapore, ledit pH chute en dessous de 7 formant des groupes acides capables de catalyser la réaction entre des groupes carboxyle et des groupes imino sur ladite résine de mélamine.

13. Procédé selon l'une quelconque des revendications précédentes, dans lequel ladite amine tertiaire comprend une alcanolamine.

14. Procédé selon l'une quelconque des revendications précédentes, dans lequel ladite alcanolamine comprend de la diméthyléthanolamine ou de la diéthyléthanolamine.

15. Procédé selon l'une quelconque des revendications précédentes, dans lequel ladite pression de vapeur d'amine à 20°C est de 1 mm à 4 mm de mercure à 20°C.

16. Procédé selon l'une quelconque des revendications précédentes, dans lequel ledit mélange comprend :
de 10 à 30 parties de latex acrylique,
de 70 à 85 parties de dispersion de polyuréthane,
de 0,2 à 1,0 partie d'amine tertiaire, et
de 1 à 3 parties de résine de mélamine-formaldéhyde.

17. Procédé selon l'une quelconque des revendications précédentes, dans lequel ledit mélange comprend :
20 parties de latex acrylique,
77 parties de dispersion de polyuréthane,
1,5 partie de résine de mélamine-formaldéhyde,
et 0,6 partie d'amine tertiaire.
